# EUROPÄISCHE PATENTSCHRIFT

(11) **EP 0 911 197 B1**
(45) Veröffentlichungstag und Bekanntmachung des Hinweises auf die Patenterteilung: **07.09.2005**
(21) Anmeldenummer: 98118672.9
(22) Anmeldetag: 02.10.1998
(51) Int. Cl.: B60H 1/22

(54) **Verfahren und Vorrichtung zum Abschalten eines Fahrzeugheizgeräts**
Method and device for shutting off a vehicle heating device
Procédé et dispositif pour arrêter un appareil de chauffage de véhicules

(30) Priorität: 16.10.1997 DE 19745864; 11.11.1997 DE 19749822
(43) Veröffentlichungstag der Anmeldung: 28.04.1999
(73) Patentinhaber: WEBASTO THERMOSYSTEME GmbH, D-82131 Stockdorf (DE)
(72) Erfinder: Kahnau, Günter, 82319 Starnberg (DE); Nigst, Helmut, 82205 Gilching (DE)
(74) Vertreter: Wiese, Gerhard

(56) Entgegenhaltungen:
- DE-A- 3 015 921
- DE-A- 3 919 563
- US-A- 4 613 072
- US-A- 4 858 825

## Beschreibung

Die Erfindung betrifft eine Anordnung umfassend ein Fahrzeugheizgerät und eine Vorrichtung zum Abschalten des Fahrzeugheizgeräts gemäß dem Oberbegriff des Patentanspruchs 1 und ein Verfahren zum Abschalten eines Fahrzeugheizgeräts gemäß dem Oberbegriff des Patentanspruchs 7.

Ein mit einem flüssigen Wärmeträger betriebenes Fahrzeugheizgerät ist beispielsweise aus der DE 35 21 372 C2 bekannt. Bei diesem werden eine Umwälzpumpe zur Förderung des flüssigen Wärmeträgers durch einen Wärmetauscher des Heizgeräts und das Steuergerät des Fahrzeugheizgerät wirkungsmäßig derart verbunden, daß über ein dem Steuergerät zugeführtes Signal - in diesem Falle Temperatursignal am Ausgang des Wärmetauschers - eine Regelung der Drehzahl der Umwälzpumpe erfolgt. Bei einem anderen, aus der DE 38 39 244 A1 bekannten Fahrzeugheizgerät wird mittels eines am Wärmetauscher angebrachten Sensors ein auf eine Überhitzung des Heizgeräts hinweisendes Signal erfaßt und dem Steuergerät zugeführt. Eine derartige Erfassung des Überhitzungsfalles funktioniert bei einer nicht vorhandenen Befüllung des Systems mit flüssigem Wärmeträger oder bei einer nicht ausreichenden Entlüftung des Systems und einer damit verbundenen Luftblasenbildung erst relativ spät, so daß es in diesen Fällen bereits zu einer Schädigung des Heizgeräts oder der Umwälzpumpe kommen kann.

Der vorliegenden Erfindung liegt die Aufgabe zugrunde, eine Anordnung und ein Verfahren zum Abschalten eines Fahrzeugheizgeräts bereit zu stellen, mittels denen eine Störung im Wärmeträgerkreislauf zuverlässig und schnell erkannt werden kann.

Diese Aufgabe wird erfindungsgemäß bezüglich der Anordnung durch die Merkmale des Patentanspruchs 1 und bezüglich des Verfahrens durch die Merkmale des Patentanspruchs 7 gelöst. Vorteilhafte Weiterbildungen der Anordnung sind den Unteransprüchen 2 bis 6 und vorteilhafte Weiterbildungen des Verfahrens den Unteransprüchen 8 bis 10 entnehmbar.

Der Kerngedanke der vorliegenden Erfindung sieht sowohl hinsichtlich der Anordnung als auch des Verfahrens vor, daß dem Steuergerät ein Wert zugeführt wird, der zumindestens indirekt die Leistungsaufnahme des Elektromotors anzeigt, welcher die Umwälzpumpe antreibt. Dem Grundgedanken liegt die Überlegung zugrunde, daß es bei einer Verstopfung in der Umwälzpumpe zu einer unterhalb des normalen Betriebsbereichs liegenden Drehzahl der Pumpe bzw. einer zur Drehzahl überproportionalen Leistungsaufnahme und bei einer nicht vorhandenen Befüllung oder mangelnden Entlüftung des Wärmeträgerkreislaufes, bei dem sich Luft in der Umwälzpumpe befindet, zu einer über der normalen Drehzahl liegenden Drehzahl der Umwälzpumpe bzw. zu einer bezogen auf die derzeitige Leistungsaufnahme zu hohen Drehzahl der Umwälzpumpe kommt.

Dementsprechend wird bei einer besonders vorteilhaften Ausgestaltung der Erfindung das dem Steuergerät zugeführte Signal die Drehzahl der Umwälzpumpe oder des Elektromotors berücksichtigen. Zusätzlich oder alternativ dazu können die Stromaufnahme des Elektromotors oder ein Spannungssignal erfaßt werden, welches beispielsweise von einem mit dem Elektromotor verbundenen Tachogenerator als Drehzahl-proportionales Signal geliefert wird.

Gemäß einer besonders vorteilhaften Ausgestaltung der Erfindung ist der Elektromotor als elektronisch kommutierter, bürstenloser Motor ausgebildet. Bei einem derartigen Motor können die Ansteuerungswerte für die Kommutierung unmittelbar in einer Auswertelogik erfaßt werden.

Es ist ferner vorteilhaft, wenn dem Elektromotor der Umwälzpumpe ein eigenes Steuergerät mit einer Auswertelogik zugeordnet ist, von welcher ein Ausgangssignal an das Steuergerät des Fahrzeugheizgeräts abgegeben wird. Eine derartige Umwälzpumpe mit einer integrierten Auswertelogik ist universell bei jedem Heizgerät einsetzbar und bedarf keiner besonderen Anpassung an das jeweils spezifische Steuergerät eines solchen unterschiedlichen Heizgeräts.

Beim erfindungsgemäßen Verfahren sind als zwingend notwendige Verfahrensschritte vorgesehen, daß zum einen ein die Leistungsaufnahme des Elektromotors anzeigender Wert erfaßt wird, daß im zweiten Schritt dieser Wert durch eine Auswertelogik hinsichtlich eines normalen Betriebsbereiches bewertet wird, der durch eine erste untere Schaltschwelle und eine zweite obere Schaltschwelle begrenzt ist, daß in einem dritten Schritt die Umwälzpumpe bei Feststellung eines Wertes außerhalb des normalen Betriebsbereiches abgeschaltet wird und daß viertens ein Signal zur Abschaltung der Heizvorrichtung erzeugt wird.

Als vorteilhafte Weiterbildungen sind vorgesehen, daß zwischen dem zweiten und dritten Verfahrensschritt als zusätzlicher Verfahrensschritt eine Prüfung des ermittelten Wertes nach einer angehängten Zeitschleife und/oder durch Abgleichen mit zusätzlichen Parametern erfolgt. Hierdurch soll sichergestellt werden, daß es sich bei der festgestellten, vom normalen Betriebsbereich abweichenden Drehzahl nicht nur um eine temporäre, kurzzeitige Störung handelt, die dann fälschlicherweise zu einem Abschalten führen würde. Schließlich ist es vorteilhaft, wenn vor dem Abschalten der Umwälzpumpe zusätzlich ein Störungs-Merker gesetzt wird, der bei einem Abschalten und erneuten Inbetriebsetzen des Heizgeräts ausgewertet wird. Hierdurch wird verhindert, daß bei einer an sich festgestellten Störung im Wärmeträgerkreislauf durch ein zu diesem Zeitpunkt erfolgendes Abschalten des Fahrzeugheizgeräts der festgestellte Fehler bei einem erneuten Einschalten unberücksichtigt bleibt. Durch die Auswertung des vorhanden Störungs-Merkers bei erneutem Einschalten wird sichergestellt, daß das Fahrzeugheizgerät zunächst eine Prüfroutine durchläuft, die ein versehentliches Starten der Heizvorrichtung verhindert.

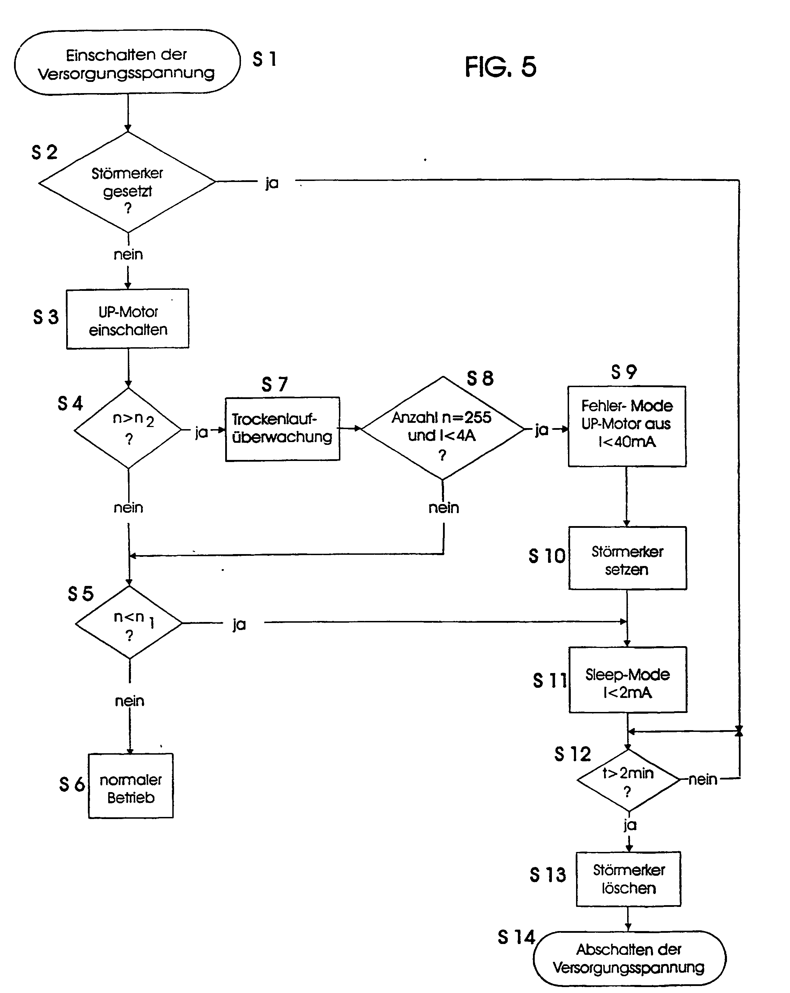

Der vorstehend beschriebene Störungs-Merker wird vorteilhaft nach Durchlaufen einer Zeitschleife vor dem Signal zur Abschaltung der Heizvorrichtung selbsttätig gelöscht. Bei einem erneuten Start des Heizgerätes wird ohnehin schon vor dem Start der Heizvorrichtung eine Prüfroutine zur Überwachung des ordnungsgemäßen Betriebes der Umwälzpumpe (wie in Fig. 5) durchlaufen.

Nachfolgend ist ein Ausführungsbeispiel der Erfindung anhand der Zeichnung beschrieben, es zeigt:
- Fig. 1:: eine schematische Darstellung eines Heizkreislaufs eines Fahrzeugs,
- Fig. 2:: eine Umwälzpumpe mit dem antreibenden Elektromotor,
- Fig. 3:: einen Längsschnitt durch den Umwälzpumpenmotor,
- Fig. 4:: ein Schaltbild zur Verdeutlichung der Verbindung zwischen Steuergerät und Umwälzpumpe und
- Fig. 5:: einen schematischen Ablaufplan der Verfahrensschritte zur Realisierung des erfindungsgemäßen Verfahrens.

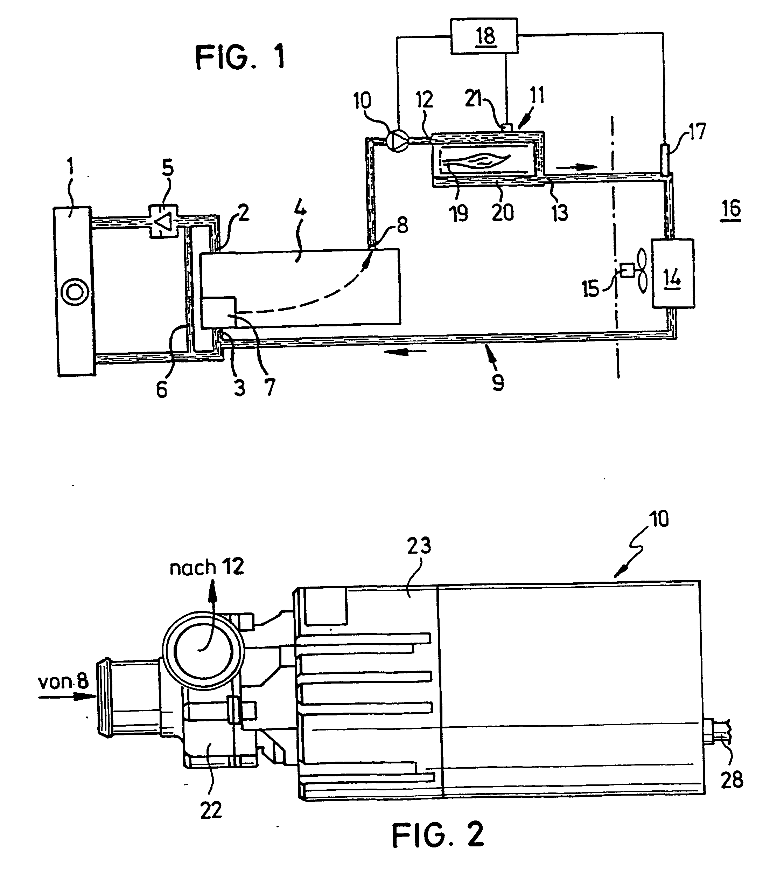

In Fig. 1 ist der Heizkreislauf eines Fahrzeuges schematisch dargestellt. Ausgehend von einem Motorblock 4 wird der zur Kühlung des Motorblocks und zu Heizzwecken verwendete flüssige Wärmeträger über einen Kühlmittelauslaß 2 einem Kühler 1 zugeführt. Vom Kühler 1 strömt der Wärmeträger über einen Einlaß 3 zurück zum Motorblock 4. Ein in der Vorlaufleitung zum Kühler 1 befindliches Thermostatventil 5 sorgt in Verbindung mit einer Bypassleitung 6 dafür, daß der Kühler 1 in der Start- und Aufwärmphase des Motorblocks 4 nicht durchströmt wird. Für die Förderung des flüssigen Wärmeträgers ist am Motorblock 4 eine Motor-Umwälzpumpe 7 vorgesehen, die sowohl für die Förderung zum Kühler 1 als auch für die Förderung über einen weiteren Kühlmittelauslaß 8 in einen insgesamt mit 9 bezeichneten Heizkreislauf veranwortlich ist. Im Heizkreislauf 9 befindet sich im Vorlaufteil zu einem Fahrzeugwärmetauscher 14 eine Umwälzpumpe 10 und ein Fahrzeugheizgerät 11. Die Umwälzpumpe 10 ist über einen Einlaß 12 mit dem Fahrzeugheizgerät 11 verbunden. Zwischen einem Auslaß 13, von dem der Wärmeträger aus dem Fahrzeugheizgerät 11 zum Fahrzeugwärmetauscher 14 strömt und diesem Fahrzeugwärmetauscher 14 ist ein Temperatursensor 17 angeordnet der die Temperatur des Wärmeträgers mißt und an ein Steuergerät 18 weiterleitet. Das Steuergerät 18 steuert alle wesentlichen Funktionen des Fahrzeugheizgeräts 11, wie beispielsweise eine zu einer Heizvorrichtung 19 gehörende Brennstoffpumpe, ein ebenfalls zur Heizvorrichtung gehörendes Brennluftgebläse, eine zumindestens in der Startphase benötigte Glüh- oder Zündeinrichtung sowie den Betrieb der Umwälzpumpe 10.

Außer dem Temperatursignal vom Temperatursensor 17 wird dem Steuergerät 18 auch ein Überhitzungssignal von einem Überhitzungssensor 21 zugeführt, der im Bereich eines vom flüssigen Wärmeträger durchströmten Wärmetauschers 20 des Fahrzeugheizgeräts 11 angeordnet ist. Im vorliegenden Fall steuert das Steuergerät 18 nicht nur die Funktion der Umwälzpumpe 10, sondern die zwischen beiden Komponenten eingezeichnete Leitung dient zusätzlich als Signalleitung von der Umwälzpumpe 10 zum Steuergerät 18.

Ein dem Fahrzeugwärmetauscher 14 zugeordnetes Heizgebläse 15 dient zur Förderung von Luft über den Fahrzeugwärmetausches 14 in einen schematisch angedeuteten Fahrzeuginnenraum 16.

In der Fig. 2 ist die Umwälzpumpe 10 insgesamt vergrößert dargestellt. Dabei wird unter dem Begriff Umwälzpumpe sowohl der mechanische Teil zur Förderung des flüssigen Wärmeträgers, der von einem Pumpengehäuse 22 umgeben ist, als auch der elektrische Teil bezeichnet, der von einem Motorgehäuse 23 umgeben ist. Das Pumpengehäuse 22 weist zwei Anschlüsse auf, von denen einer mit der Vorlaufleitung verbunden ist, die vom Kühlmittelauslaß 8 des Motorblocks 4 her kommt und von denen der andere mit dem Einlaß 12 des Fahrzeugheizgeräts 11 verbunden ist.

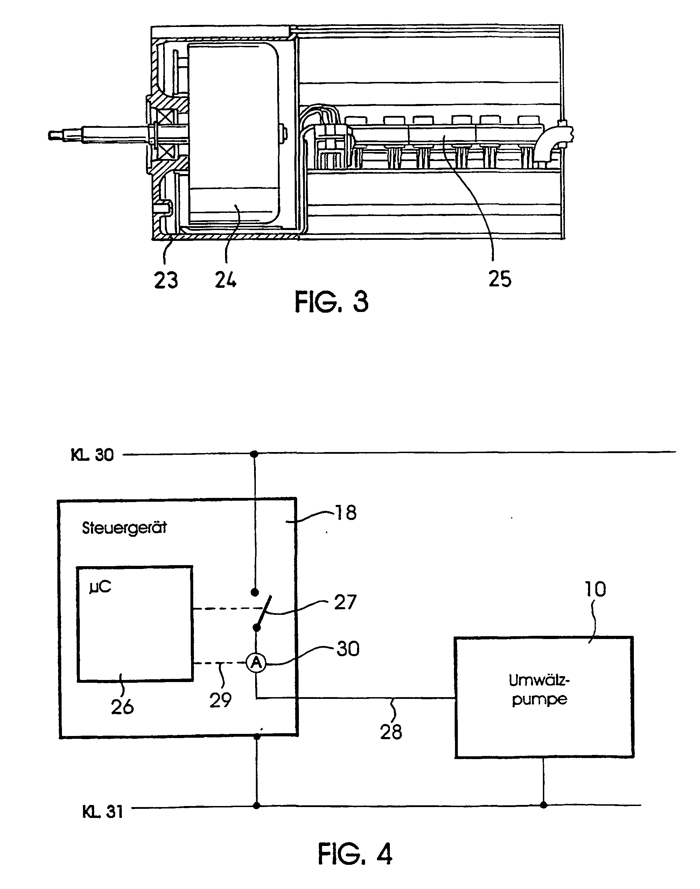

In Fig. 3 ist das Motorgehäuse 23 geschnitten dargestellt. Dabei wird erkennbar, daß sich der Elektromotor 24 zum Antreiben der Umwälzpumpe im linken Teil des Gehäuses befindet, während sich im rechten Teil ein eigenes Steuergerät 25 mit verschiedenen Bauteilen zur Ansteuerung des Elektromotors 24 befindet. Dem Steuergerät 25 ist auch eine eigene Auswertelogik zugeordnet, in der die Drehzahl oder ein zur Drehzahl des Elektromotors proportionales Spannungssignal gegebenenfalls unter Berücksichtigung weiterer Parameter, wie beispielsweise des aufgenommenen Motorstromes ausgewertet wird.

In der Fig. 4 ist die Verbindung zwischen dem Steuergerät 18, das die Funktionen des Fahrzeugheizgeräts 11 insgesamt steuert und dem Steuergerät 25 der Umwälzpumpe 10 gezeigt. Das Steuergerät 18 weist einen Mikroprozessor 26 auf, von dem sämtliche Verfahrensabläufe des Fahrzeugheizgeräts 11 gesteuert werden. Unter anderem wird vom Mikroprozessor 26 auch ein Schalter 27 beispielsweise mittels eines Schaltrelais oder eines Leistungstransistors betätigt. Bei geschlossenem Schalter 27 wird über eine Stromleitung 28 das Steuergerät 25 mit dem Stromkreislauf des Fahrzeugs , dargestellt durch die Bezeichnungen K1 30 bzw. K1 31 für den Pluspol der Batterie und die Masse, verbunden. Die Stromleitung 28 dient bei bestimmten Betriebszuständen gleichzeitig als Signalleitung zwischen dem Steuergerät 25 und dem Mikroprozessor 26 des Steuergeräts 18. Wird nämlich durch die Auswertlogik des Steuergeräts 25 ein Betrieb der Umwälzpumpe 10 erkannt, bei dem beispielsweise die Drehzahl n unter einer unteren Schaltschwelle n₁ oder über einer oberen Schaltschwelle n₂ liegt, so wird auf eine Störung im Bereich des Wärmeträgerkreislaufes geschlossen und die Umwälzpumpe 10 wird in einen Sleep-Mode überführt. In diesem Ruhemodus wird durch das Steuergerät 25 der aufgenommene Strom auf einen minimalen Wert von I = 2 mA zurückgeführt. An dem geringen Strom, der über die Stromleitung 28 fließt, erkennt eine Strommessung in Form eines Amperemeters 30, daß eine Störung vorliegt; diese wird über eine Signalleitung 29 an den Mikroprozessor 26 des Steuergeräts 18 weitergemeldet. Dieses Signal wird dann für eine Unterbrechung des Betriebes der Heizvorrichtung 19 verwendet.

Durch die vorstehend beschriebene Vorrichtung kann bei einer fehlenden Befüllung des Systems mit flüssigem Wärmeträger bzw. bei einer mangelhaften Entlüftung, bei der beispielsweise Gasblasen im Bereich der Umwälzpumpe 10 vorhanden sind, eine Überhitzung des Fahrzeugheizgeräts 11 wirkungsvoll verhindert werden. Würde nämlich der Wärmetauscher 20 gamicht oder mangelhaft vom flüssigen Wärmeträger durchströmt, so würde bei einem Betrieb der Heizvorrichtung 19 der Bereich der Brennkammer und der inneren Wände des Wärmetauschers 20 sehr schnell überhitzt und dies bevor an der Außenwand des Wärmetauschers 20 der Überhitzungssensor 21 ein Ansteigen der Temperatur auf einen unzulässigen Wert erkennen würde. Die beschriebene Vorrichtung erhöht somit wesentlich die Betriebssicherheit eines Fahrzeugheizgeräts.

Im folgenden sind die zur Realisierung eines erfindungsgemäßen Verfahrens mit optionalen vorteilhaften Weiterbildungen notwendigen Verfahrenschritte beschrieben. In einem ersten Verfahrensschritt S1 wird die Versorgungsspannung der Umwälzpumpe 10 durch den Schalter 27 eingeschaltet. Sämtliche folgenden Verfahrensschritte S2 - S14 werden in der beschriebenen bevorzugten Ausführungsform durch das eigene intelligente Steuergerät 25 der Umwälzpumpe 10 ausgeführt. In einer einfacheren Version ist es jedoch ebenso denkbar, durch entsprechende Sensoren am Elektromotor der Umwälzpumpe entsprechende Signale zu erfassen und diese in einer Auswertelogik im Steuergerät 18 des Fahrzeugheizgeräts auszuwerten.

In einem zweiten Verfahrensschritt S2 wird geprüft, ob ein Stör-Merker gesetzt ist. Ist dies nicht der Fall, so wird im Verfahrensschritt S3 der Elektromotor 24 der Umwälzpumpe 10 eingeschaltet. Im Verfahrensschritt S4 wird geprüft, ob die Drehzahl n des Elektromotors 24 bzw. der Umwälzpumpe 10 größer ist als eine obere Schaltschwelle n_{2,} welche die obere Grenze eines normalen Betriebsbereiches der Umwälzpumpe darstellt. Ist das nicht der Fall wird in einem weiteren Verfahrensschritt S5 geprüft, ob die Drehzahl n des Elektromotors 24 bzw. der Umwälzpumpe 10 kleiner ist als eine erste Schaltschwelle n₁, welche die untere Grenze des normalen Betriebsbereiches der Umwälzpumpe 10 charakterisiert. Ist auch das nicht der Fall, wird der Betrieb der Umwälzpumpe 10 im Verfahrensschritt S6 normal fortgesetzt. Der Zyklus der Verfahrensschritte S2 bis S6 kann einmalig bei jedem Neustart des Heizgeräts 11 oder auch kontinuierlich während des laufenden Betriebes erfolgen.

Wird im vierten Verfahrensschritt S4 festgestellt, daß die ermittelte Drehzahl n größer ist als die zweite Schaltschwelle n₂, so wird im Verfahrensschritt S7 eine Trockenlaufüberwachung der Umwälzpumpe 10 gestartet. Hierzu wird in einem Verfahrensschritt S8 die Drehzahl der Umwälzpumpe 10 bzw. des Elektromotors 24 in einer Mehrfachschleife in Verbindung mit der dabei vorliegenden Motorstromaufnahme geprüft. Im vorliegenden Fall wird bei einer Drehzahl der Umwälzpumpe 10, die im Normalbetrieb beispielsweise bei etwa 5.500 Umdrehungen/min. liegt, während beispielsweise 255 Umdrehungen, d.h. für eine Dauer von etwa 3 sec. geprüft, ob die Stromaufnahme des Elektromotors 24 kleiner als 4 Ampere ist. Der Grenzwert von 4A entspricht dem Wert der Stromaufnahme des Elektromotors 24, bei dem gerade noch hinreichend flüssiger Wärmeträger zur Verhinderung einer Beschädigung des Wärmetauschers 20 gefördert wird. Wird dieser Wert überschritten, d.h. die Frage im Verfahrensschritt S8 mit nein beantwortet, so verzweigt der Ablauf zum Pfad zwischen den Verfahrensschritten S4 und S5. Wird die Anfrage in Verfahrensschritt S8 dagegen positiv beantwortet, d.h. liegt während der gemessenen 255 Umdrehungen die Stromaufnahme des Elektromotors unter 4 Ampere, wird davon ausgegangen, daß die Umwälzpumpe 10 im wesentlichen Luft fördert. Als Konsequenz wird im Verfahrensschritt S9 ein Fehler-Mode ausgelöst, in dem der Elektromotor 24 abgeschaltet wird, wobei dessen Stromaufnahme kleiner ist als 40 mA. Daraufhin wird im Verfahrensschritt S10 ein Stör-Merker gesetzt.

Im folgenden Verfahrensschritt S11 wird das Steuergerät 25 in einen Sleep-Mode überführt, bei dem die Stromaufnahme I = 2mA beträgt. Sollte die weiter oben beschriebene Abfrage im Verfahrensschritt 5 eine positive Anwort ergeben, so mündet der daraus entstehende Pfeil im Diagramm der Fig. 5 ebenfalls vor dem Verfahrensschritt S11 in den Pfad ein. Das heißt, daß bei einem Unterschreiten der Drehzahl n unter einen unteren Schwellwert n₁, der einem Verstopfen oder Blockieren entspricht, ebenfalls ein Ansteuern des Sleep-Mode erfolgt.

Im nunmehr anschließenden Verfahrensschritt S12 wird eine Zeitschleife von 2 Minuten durchlaufen. In deren rekursiven Pfad mündet auch der Pfad ein, der vom Verfahrensschritt S2 bei einer positiven Beantwortung der dortigen Anfrage abgeleitet ist. Nach Ablauf der Zeitschleife im Verfahrensschritt S12 wird im Verfahrensschritt S13 der gesetzte Stör-Merker gelöscht und im Verfahrensschritt S14 die Versorgungsschaltung des Steuergeräts 25 abgeschaltet. Hierbei wird der Schalter 27 durch den Mikroprozessor 26 des Steuergeräts 18 geöffnet.

Je nach erforderlicher Sicherheitsstufe des verwendeten Fahrzeugheizgeräts 11 kann entweder das Erkennen eines Fehler-Modes im Verfahrensschritt S9 oder das Setzen eines Stör-Merkers im Verfahrensschritt S10 oder das Setzen eines Sleep-Mode im Verfahrensschritt S11 dazu verwendet werden, daß die Leistung der Heizvorrichtung 19 entweder reduziert oder auf Null heruntergefahren wird. Der Stör-Merker dient dazu, bei einem Abschalten des Fahrzeugheizgeräts 11 nach Erkennen eines Fehler-Modes im Verfahrensschritt S9 bei einem erneuten Einschalten des Fahrzeugheizgeräts eine erkannte Betriebsstörung erneut auszuwerten. Dadurch werden mehrfache Startversuche der Pumpe innerhalb kurzer Zeit vermieden, was die Pumpe schädigen könnte.

### Bezugszeichenliste

- 1: Kühler
- 2: Kühlmittelauslaß
- 3: Kühlmitteleinlaß
- 4: Motorblock
- 5: Thermostatventil
- 6: Bypassleitung
- 7: Motor- Umwälzpumpe
- 8: (weiterer) Kühlmittelauslal
- 9: Heizkreislauf
- 10: Umwälzpumpe
- 11: Fahrzeugheizgerät
- 12: Einlaß
- 13: Auslaß
- 14: Fahrzeugwärmetauscher
- 15: Heizgebläse
- 16: Fahrzeuginnenraum
- 17: Temperaturfühler
- 18: Steuergerät
- 19: Heizvorrichtung
- 20: Wärmetauscher
- 21: Überhitzungssensor
- 22: Pumpengehäuse
- 23: Motorgehäuse
- 24: Elektromotor
- 25: Steuergerät (von 24)
- 26: Mikroprozessor
- 27: Schalter
- 28: Stromleitung
- 29: Signal-Leitung

- S1 - S14: Verfahrensschritte
- n₁: untere Schaltschwelle
- n₂: obere Schaltschwelle

## Patentansprüche

1. Anordnung umfassend ein Fahrzeugheizgerät und eine Vorrichtung zum Abschalten eines Fahrzeugheizgeräts (11), bei dem ein flüssiger Wärmeträger durch eine Heizvorrichtung erwärmt und mittels einer von einem Elektromotor (24) angetriebenen Umwälzpumpe (10) durch einen Wärmetauscher (20) des Heizgeräts (11) gefördert wird, wobei die Vorrichtung ein Steuergerät (18) aufweist, das den Betrieb der Heizvorrichtung (19) sowie zumindestens teilweise auch den Betrieb der Umwälzpumpe (10) steuert, wobei dem Steuergerät (18) über wenigstens eine Signalleitung (28,29) ein Signal über eine Betriebsstörung der von ihm angesteuerten Komponenten zuführbar ist, **dadurch gekennzeichnet, daß** die zwischen der Umwälzpumpe (10) bzw. deren Elektromotor (24) und dem Steuergerät (18) vorgesehene wenigstens eine Signalleitung (28, 29) dem Steuergerät (18) als Signal für eine Förderstörung einen zumindestens indirekt die Leistungsaufnahme des Elektromotors (24) anzeigenden Wert zuführt und daß ferner eine Auswertelogik vorgesehen ist, die diesen Wert im Hinblick darauf überprüft, ob der Wert einem Betrieb der Umwälzpumpe (10) in einem Betriebsbereich oberhalb einer ersten Schaltschwelle (n₁) und unterhalb einer zweiten Schaltschwelle (n₂) entspricht.

2. Anordnung nach Anspruch 1, **dadurch gekennzeichnet, daß** das Signal die Drehzahl der Umwälzpumpe (10) oder des Elektromotors (24) berücksichtigt.

3. Anordnung nach Anspruch 1 oder 2, **dadurch gekennzeichnet, daß** das Signal die Stromaufnahme des Elektromotors (24) berücksichtigt.

4. Anordnung nach Anspruch 1, **dadurch gekennzeichnet, daß** der Elektromotor (24) als elektronisch kommutierter, bürstenloser Motor ausgebildet ist.

5. Anordnung nach Anspruch 1, **dadurch gekennzeichnet, daß** der Elektromotor (24) mit einem Tachogenerator verbunden ist, der eine zur Drehzahl proportionale Spannung als Signal an das Steuergerät (18) liefert.

6. Anordnung nach einem der vorhergehenden Ansprüche, **dadurch gekennzeichnet, daß** die Auswertelogik in einem dem Elektromotor (24) der Umwälzpumpe (10) zugeordneten eigenen Steuergerät (25) angeordnet ist, von welcher ein Ausgangssignal an das Steuergerät (18) des Fahrzeugheizgeräts abgegeben wird.

7. Verfahren zum Abschalten eines Fahrzeugheizgeräts zur Vermeidung einer Überhitzung desselben, mit wenigstens einem Steuergerät (18, 25) zur Steuerung einer Heizvorrichtung (19) und einer von einem Elektromotor (24) angetriebenen Umwälzpumpe (10) zur Förderung eines flüssigen Wärmeträgers, **gekennzeichnet durch** folgende Verfahrensschritte:
a) Erfassen eines die Leistungsaufnahme des Elektromotors anzeigenden Wertes, wie z.B. der Drehzahl, des Motorstroms oder der Spannung,
b) Bewertung des Wertes **durch** eine Auswertelogik (25) im Hinblick darauf, ob der Wert einem Betrieb der Umwälzpumpe (10) in einem Betriebsbereich oberhalb einer ersten Schaltschwelle (n₁) und unterhalb einer zweiten Schaltschwelle (n₂) entspricht,
c) Abschalten der Umwälzpumpe (10) beim Unterschreiten der ersten Schaltschwelle (n₁) oder beim Überschreiten der zweiten Schaltschwelle (n₂),
d) Abgabe eines Signals zur Abschaltung der Heizvorrichtung (19).

8. Verfahren nach Anspruch 7, **dadurch gekennzeichnet, daß** zwischen den Verfahrensschritten b) und c) als weiterer Verfahrensschritt vorgesehen ist:
e) Prüfen des ermittelten Wertes nach einer angehängten Zeitschleife (S8) und/oder durch Abgleichen mit zusätzlichen Parametern wie z.B. Temperatur, Motorstromaufnahme.

9. Verfahren nach Anspruch 7 oder 8, **dadurch gekennzeichnet, daß** nach den Verfahrensschritten b) bzw. e) als weiterer Verfahrensschritt vorgesehen ist:
f) Setzen eines Störungs-Merkers, der bei einem Abschalten und erneuten Inbetriebsetzen des Heizgeräts (11) ausgewertet wird.

10. Verfahren nach Anspruch 9, **dadurch gekennzeichnet, daß** der Störungsmerker nach Durchlaufen einer Zeitschleife (S12) vor dem Verfahrensschritt d) gelöscht wird.

## Claims

1. Arrangement comprising a vehicle heater and an apparatus for switching off a vehicle heater (11), in which a liquid heat exchange medium is heated by a heating apparatus and is conveyed through a heat exchanger (20) of the heater (11) by means of a circulating pump (10) driven by an electric motor (24), the apparatus having a controller (18), which controls the operation of the heating apparatus (19) and, at least to some extent, also the operation of the circulating pump (10), it being possible for the controller (18) to be supplied via at least one signal line (28, 29) with a signal indicating an operational fault of the components driven by it, **characterized in that** the at least one signal line (28, 29) provided between the circulating pump (10) or its electric motor (24) and the controller (18) supplies the controller (18) with a value at least indirectly indicating the power consumption of the electric motor (24) as a signal for a delivery fault, and **in that**, moreover, evaluation logic is provided which checks this value with regard to whether the value corresponds to operation of the circulating pump (10) in an operating region above a first switching threshold (n₁) and below a second switching threshold (n₂).

2. Arrangement according to Claim 1, **characterized in that** the signal takes into account the rotational speed of the circulating pump (10) or the electric motor (24).

3. Arrangement according to Claim 1 or 2, **characterized in that** the signal takes into account the current consumption of the electric motor (24).

4. Arrangement according to Claim 1, **characterized in that** the electric motor (24) is constructed as an electronically commutated brushless motor.

5. Arrangement according to Claim 1, **characterized in that** the electric motor (24) is connected to a tachogenerator, which supplies a voltage proportional to the rotational speed as a signal to the controller (18).

6. Arrangement according to one of the preceding claims, **characterized in that** the evaluation logic is arranged in a dedicated controller (25) assigned to the electric motor (24) of the circulating pump (10), from which controller an output signal is output to the controller (18) of the vehicle heater.

7. Method for switching off a vehicle heater in order to avoid overheating of the same, comprising at least one controller (18, 25) for controlling a heating apparatus (19) and a circulating pump (10) driven by an electric motor (24) for delivering a liquid heat exchange medium, **characterized by** the following method steps:
a) registering a value indicating the power consumption of the electric motor, such as the rotational speed, the motor current or the voltage,
b) assessing the value by means of evaluation logic (25) with regard to whether the value corresponds to operation of the circulating pump (10) in an operating region above a first switching threshold (n₁) and below a second switching threshold (n₂),
c) switching off the circulating pump (10) if the value falls below the first switching threshold (n₁) or if the value exceeds the second switching threshold (n₂),
d) outputting a signal to switch off the heating apparatus (19).

8. Method according to Claim 7, **characterized in that** the following is provided as a further method step between method steps b) and c):
e) checking the value determined after a following timing loop (S8) and/or by comparing with additional parameters, such as temperature, motor current consumption.

9. Method according to Claim 7 or 8, **characterized in that** the following is provided as a further method step after method steps b) and e):
f) setting a fault flag, which is evaluated when the heater (11) is switched off and started up again.

10. Method according to Claim 9, **characterized in that** the fault flag is reset after passing through a timing loop (S12) before method step d).

## Revendications

1. Dispositif comprenant un appareil de chauffage de véhicule et un dispositif pour arrêter un appareil de chauffage de véhicule (11), dans lequel un agent caloporteur liquide est réchauffé par un dispositif de chauffage et refoulé au moyen d'une pompe de circulation (10) entraînée par un moteur électrique (24) à travers un échangeur de chaleur (20) de l'appareil de chauffage (11), dans lequel le dispositif présente un appareil de commande (18) qui commande le fonctionnement du dispositif de chauffage (19) ainsi qu'au moins en partie aussi le fonctionnement de la pompe de circulation (10), dans lequel un signal sur un incident de fonctionnement des composants commandés par lui peut être amené à l'appareil de commande (18) via au moins une ligne de signalisation (28, 29), **caractérisé par le fait que** ladite au moins une ligne de signalisation (28, 29) prévue entre la pompe de circulation (10) ou son moteur électrique (24) et l'appareil de commande (18) amène en tant que signal d'un incident de refoulement une valeur indiquant au moins indirectement la consommation de puissance du moteur électrique (24) et qu'il prévu en outre une logique d'évaluation qui vérifie si cette valeur correspond à un fonctionnement de la pompe de circulation (10) dans une plage de fonctionnement située au-dessus d'un premier seuil de commutation (n₁) et au-dessous d'un deuxième seuil de commutation (n₂).

2. Dispositif selon la revendication 1, **caractérisé par le fait que** le signal tient compte de la vitesse de rotation de la pompe de circulation (10) ou du moteur électrique (24).

3. Dispositif selon la revendication 1 ou 2, **caractérisé par le fait que** le signal tient compte de la consommation de courant du moteur électrique (24).

4. Dispositif selon la revendication 1, **caractérisé par le fait que** le moteur électrique (24) est constitué d'un moteur à commutation électronique sans balais.

5. Dispositif selon la revendication 1, **caractérisé par le fait que** le moteur électrique (24) est relié à une génératrice tachymétrique qui fournit comme signal à l'appareil de commande (18) une tension proportionnelle à la vitesse de rotation.

6. Dispositif selon l'une des revendications précédentes, **caractérisé par le fait que** la logique d'évaluation se trouve dans un appareil de commande (25) propre au moteur électrique (24) de la pompe de circulation (10), lequel délivre un signal de sortie à l'appareil de commande (18) de l'appareil de chauffage de véhicule.

7. Procédé pour arrêter un appareil de chauffage de véhicule en vue d'éviter une surchauffe dudit appareil de chauffage de véhicule, avec au moins un appareil de commande (18, 25) pour commander un dispositif de chauffage (19) et une pompe de circulation (10) entraînée par un moteur électrique (24) pour refouler un agent caloporteur liquide, **caractérisé par** les étapes de procédé suivantes :
a) saisie d'une valeur indiquant la consommation de puissance du moteur électrique comme p. ex. la vitesse de rotation, le courant du moteur ou la tension,
b) évaluation de la valeur par une logique d'évaluation (25) pour vérifier si la valeur correspond à un fonctionnement de la pompe de circulation (10) dans une plage de fonctionnement située au-dessus d'un premier seuil de commutation (n₁) et au-dessous d'un deuxième seuil de commutation (n₂),
c) arrêt de la pompe de circulation (10) si la valeur devient inférieure au premier seuil de commutation (n₁) ou supérieure au deuxième seuil de commutation (n₂),
d) émission d'un signal d'arrêt du dispositif de chauffage (19).

8. Procédé selon la revendication 7, **caractérisé par le fait qu'**il est prévu entre les étapes de procédé b) et c) l'étape de procédé supplémentaire suivante :
e) contrôle de la valeur déterminée après une boucle de temporisation (S8) ajoutée et/ou par comparaison avec des paramètres supplémentaires comme p. ex. température, consommation de courant du moteur.

9. Procédé selon la revendication 7 ou 8, **caractérisé par le fait qu'**il est prévu après les étapes de procédé b) ou e) l'étape de procédé supplémentaire suivante :
f) mise à 1 d'un indicateur d'incident qui est évalué lors d'un arrêt et d'une remise en service de l'appareil de chauffage (11).

10. Procédé selon la revendication 9, **caractérisé par le fait que** l'indicateur d'incident est effacé après passage à travers une boucle de temporisation (S 12) avant l'étape de procédé d).
